# EUROPEAN PATENT SPECIFICATION

(11) **EP 3 606 119 B1**
(45) Date of publication and mention of the grant of the patent: **17.03.2021**
(21) Application number: 18000645.4
(22) Date of filing: 02.08.2018
(51) Int. Cl.: H04W 8/20, H04W 8/18, H04W 12/06, H04W 12/00

(54) **METHOD FOR MANAGING SUBSCRIPTION PROFILES, SUBSCRIPTION MANAGING SERVER AND UICC**
VERFAHREN ZUR VERWALTUNG VON ABONNEMENTPROFILEN, ABONNEMENTVERWALTUNGSSERVER UND UICC
PROCÉDÉ DE GESTION DE PROFILS D'ABONNEMENT, SERVEUR DE GESTION D'ABONNEMENT ET UICC

(43) Date of publication of application: 05.02.2020
(73) Proprietor: Giesecke+Devrient Mobile Security GmbH, 81677 München (DE)
(72) Inventor: Parihar, Mohit Singh, 486001 Madhya Pradesh (IN)

(56) References cited:
- US-A1- 2017 366 962
- US-A1- 2018 098 213
- US-A1- 2018 206 123

## Description

### TECHNICAL FIELD OF THE INVENTION

The invention relates to a method for managing subscription profiles in a Universal Integrated Chip Card (UICC), preferably an embedded UICC. The invention also relates to a method for managing subscription profiles in local profile assistant. The invention also relates to a UICC and a computer-program-product. The term UICC will be used synonymic to the term eUICC hereinafter.

### TECHNICAL BACKGROUND OF THE INVENTION

An approach of the Global System for Mobile Communications Association (GSMA) is focused on a remote SIM provisioning and management system for terminal device as for instance outlined in GSMA Technical Specification "Remote SIM Provisioning system", version 2.2, published on September 01, 2017. Therefore, the GSMA defined a minimum setup of technical solutions for such a remote SIM provisioning using an eUICC included in a terminal device, such as machine-to-machine device (M2M) or consumer devices, which are not easily physically accessible or not easily replaceable using a local profile assistance (LPA) included in the terminal device. This technical solution provides the basis for ensuring global interoperability between potentially different mobile network operator's (MNO) deployment scenarios, different network equipment, different terminal device platforms and different eUICC platforms.

The terminal device compliant with this application has implemented a local profile assistance, LPA and an eUICC.

In US 2017/0366962 A1, an electronic device is provided. The electronic device includes at least one processor and an embedded universal integrated circuit card, eUICC, configured to be electrically connected with the at least one processor. The at least one processor is configured to implement a management module configured to manage a profile stored in the eUICC. The management module is configured to, when there is an enabled profile in the eUICC, perform a communication function based on the enabled profile and, when there is no enabled profile in the eUICC, disable at least one of a periodic eUICC verification function and a network search function. In operation, the eUICC can disable an enabled profile. A profile list database can be stored in a memory of the electronic device. A state (enabled or disabled) of each profile is obtained by the LPA.

An eUICC architecture widely leverages current telecommunication standards, as well as Global Platform standards that are especially well adapted to establish Role separation and data isolation. To ensure a high level of security, e.g. against frauds or attacks and to ensure that a subscriber is properly identified at an MNO, the eUICC architecture comprises a set of security domains for platform and profile management, such as a root issuer security domain, ISD-R, and at least one profile issuer security domain, ISD-P.

An ISD-P remains associated to the ISD-R, during all its life time for the ISD-R to be able to perform management functions, such profile creation, deletion, enabling, disabling functions. This performance is called profile life-cycle.

It has been defined that only one ISD-P is enabled on an eUICC at any point in time. No profile component of a profile is visible or accessible for components outside its own ISD-P. So, no ISD-P is visible or accessible to any other ISD-P in the eUICC.

However, disabled profiles, still included in an eUICC may require valuable memory space that may be needed in the eUICC for other purposes, such as an over-the-air (OTA), updates of the enabled profile or another set of profile applications/files, or even for applications required outside the ISD-R, such as sensor data, measuring reports or other typical M2M data.

So, instead of disabling a specific profile and re-enabling it later while having the profile data still contained in the disabled profile, it may be necessary to delete the profile data or at least parts thereof to gain available memory space in the eUICC for other purposes.

However, the GSMA defined deletion procedure for profiles requires the removal of the ISD-P and its entire profile. A drawback of such a deletion is that all updates of static profile data of profile data during an enabled-state of that profile are lost and a re-establishing consumes time.

So, there is a need for gaining eUICC memory space when profiles are disabled. An entire deletion of the profile data should be avoided, and these data should be secured. This securing should not violate the technical specification for managing profiles and should help for a faster re-establishing of a previously deleted profile to have the latest version prior its deletion included in the eUICC.

Further, in case, the profile should be re-established (created and enabled again), all the profile data, e.g. static and non-static profile data must be downloaded again. The profile downloading procedure in the above-mentioned SIM provisioned system is slow and creating and completing the profile may take inconvenient time. Further, the non-static profile date is missing and may have to be loaded to the eUICC again after enablement of the profile, piece-by-piece, which increases network traffic, and which also increases the duration for re-establishing the profile to have a fully functional enabled profile.

The profile management and especially any profile related data should remain local without excessive server-side activities, preferably even without any server interventions.

### SUMMARY OF THE INVENTION

The above identified objects are solved by the features of the independent claims. Further advantageous embodiments are derived from the respective dependent claims.

According to an aspect, there is provided a method for managing subscription profiles in a Universal Integrated Chip Card, UICC, preferably an embedded UICC, included in a terminal device having a local profile assistant, LPA, the method comprising the steps of: Receiving a profile-disabling command from the local profile assistant for disabling an enabled subscription profile in the UICC, wherein the subscription profile comprises profile data; Disabling the subscription profile by the UICC; and Sending at least the non-static profile data to the local profile authority.

Herein, the terms "UICC" and "eUICC" are both referred to "eUICC" that is understood as an integrated circuit, IC, that is intended to securely store at least one subscription profile having static and non-static profile data. An enabled profile in an eUICC may host an international mobile subscriber identity number, IMSI, a unique serial number, ICCID, cryptographic encryption/decryption keys (e.g. Ksim), security authentication and ciphering information, temporary information related to the local network, a list of the services the user has access to, and two passwords: a personal identification number (PIN) for ordinary use, and a personal unblocking code (PUK) for PIN unlocking, which are used to uniquely identify and authenticate a subscriber on a terminal device, such as an M2M device, a mobile phone, a personal computer and so on.

The UICC is a physical smart card, which is usually made of plastic, such as PVC with contact pads that are linked to a semiconductor embedded in the card and having SIM formats as standardized according to international specifications ISO/IEC 7810 or ETSI TS 102.221. Another format of UICC is called "eUICC", also referred to as e-SIM, which comprises the UICC in a non-replaceable embedded chip package, which may be soldered directly onto a circuit board. It will have M2M, and remote SIM provisioning capabilities.

The eUICC may either be removable or non-removable. A removable eUICC may be packaged in a Form Factor as specified in ETSI TS 102 221.

The UICC may be a JC-based UICC configured to manage the UICC underlying hardware and software resources and provides common services for connected entities via standardized interfaces. The execution of instructions in a UICC environment is highly standardized and interfaces and responses are well defined in technical standardizations of the GSMA. The eUICC may support SHA-1; TUAK; Milange and should be implemented in a tamper-resistant way being resistant to side-channel attacks.

Preferably, a profile has static profile data and non-static profile data of profile data, hereinafter also referred as static component and non-static component. The static profile data is the profile data available in the UICC after a downloading and creating-procedure. This static profile data is specified by and under the full control of the MNO. The static profile data may contain at least one of the following: an MNO security domain, MNO-SD having the MNO's OTA Key sets; at least one network access application, NAA, policy rules, POL, a file system; connectivity parameters of the profile, applications (e.g. as defined in Global Platform Card Specification in addition to the MNO-SD); and/or one Controlling Authority SD, CASD, e.g. as defined in Global Platform Card Specification UICC Configuration.

However, during an enabled-state of the profile further elements are added to the static profile data, e.g. by updates, extensions or other amendments. These further elements can be added to the static profile data. Each change in the static profile data after enabling of the profile is now referenced as non-static profile data.

The static profile data may be delivered from a server, such as a subscription managing server, e.g. a subscription managing data preparation server, SM-DP, SM-DP+. So, a secure channel can be established between the SM-DP and the ISD-R (ES8-interface). The eUICC may support SCP80 and SCP81 as defined in ETSI 102 225 and/or ETSI 102 226.

The eUICC may communicate with an MNO server. So, a secure channel can be established between an MNO OTA Platform and the ISD-R and/or the ISD-P as specified in ETSI TS 102 225 and/or ETSI TS 102 226 (ES6.Interface).

The LPA is in the terminal device and has an interface to the server, e.g. the SM-DP to retrieve and forward profile data from the server (ES9.interface) to the eUICC (ES10x.interface). The LPA is an assistant for subscription profile management. Due to higher communication and computational resources of the LPA in comparison to the eUICC, the subscription management using LPA resources is faster.

The LPA may communicate with the eUICC via LPA-services included in the eUICC. These LPA-services provide a necessary access to services and data required by LPA functions. These services inter alia are: Transfer Bound Profile Package from the LPA to an ISD-P; a list of installed profiles; and Providing of Local Profile Management Operations. LPA Services may be mandatory even if the LPA is located within the eUICC (LPAe).

The profile-disabling command may be provided from an LPA to the eUICC during a profile-disabling procedure as defined in GSMA, preferably as a Java Card function.

The profile-disabling step in the eUICC may be regarded as a disabling of the targeted ISD-P as defined in GSMA. So, there may be an enabling of a fallback attribute set to ensure that the eUICC is still reachable and configurable.

The sending of at least non-static profile data to the LPA from the eUICC may be JC function based.

After sending of at least non-static profile data, a proactive command "REFRESH" may be sent from the eUICC to the terminal device hosting the eUICC. So, the fallback attribute set may be used to achieve network accessibility.

So, the disabling-profile-procedure is used to secure at least the non-static profile data of the profile to be disabled. So, the profile state prior its disabling is frozen and can be secured in the LPA.

In a preferred embodiment, after the step of sending of at least non-static profile data to the LPA, the method further comprises: Triggering the deletion of the non-static profile data of the disabled subscription profile in the UICC; and Deleting at least the non-static profile data from the disabled subscription profile without deletion of the profile issuer security domain, ISD-P. The LPA has higher storage capacities compared to eUICC and so, after sending the non-static profile data, they can be deleted from the eUICC. Preferably, the fallback attribute set has been confirmed by the network so, the deletion of these profile data will not result in an unreachable eUICC.

The deletion-procedure is made without deleting the ISD-P and the profile slot itself. Meaning, although the profile data may be deleted partly (only on-static profile data) or entirely, the ISD-P remains in the eUICC. So, an empty profile indicated by its ISD-P is left in the eUICC. Since the ISD-P does not consume much memory space but its remaining highly simplifies a subsequent profile-enabling procedure. So, the time for re-establishing (restoring) the profile is reduced.

The profile-deleting may be initiated by the LPA during the disabling procedure received at the eUICC. In this case, a deletion function will be send from the LPA to the eUICC as a trigger, which will be interpreted in the eUICC as an acknowledgement that profile data are successfully stored in the LPA and its deletion in the eUICC can be started. So, the LPA firstly obtains the non-static profile data and then triggers/indicates the deletion.

Preferably, the sending step also includes sending the static profile data to the local profile authority. So, both the non-static profile data and the static profile data are delivered to the LPA. So, a subsequent deletion of the non-static profile data and the static profile data can be performed by the eUICC with removal of all static and non-static profile data, since they are safely transferred to the LPA. This will gain the available memory space in the eUICC.

The non-static profile data of the subscription profile may comprise elements, e.g. at least one of the following: at least one subscription profile application update; at least one subscription profile file update; at least one network access application update; at least one over-the-air update; and/or at least one secure domain data update.

Since each of these elements of the non-static profile data may be updated separately and during different time points during the enabling-state of the profile, all the elements in the non-static profile data of the profile are now advantageously collected and provided to the LPA during a profile-disabling-procedure. So, it will be possible to restore this non-static profile data at once and avoiding a piece-by-piece updating of the profile after re-enabling the profile.

In a preferred embodiment, before the step of sending the profile-disabling command response to the server, the method may further comprise the steps of: Structuring the profile data (of the profile to be disabled) in an Abstract Syntax Notation One, ANS.1, language by encoding the profile data (either non-static profile data or complete profile data) in a Distinguished Encoding Rules, DER, format.

ASN.1 is an interface description language for defining data structures that can be serialized and deserialized in a standard, cross-platform way and so allows a platform independent transmittal of the non-static profile data. ASN.1 can use a set of encoding rules that specify how to represent a data structure as a series of bytes. Advantageously, a DER-formatted encoding rule is used. DER produces unequivocal transfer syntax for data structures described by ASN.1. DER provides exactly one way to encode an ASN.1 value to enable a unique encoding and ensures that a data structure that needs to be digitally signed produces a unique serialized representation. Since DER is widely used in mobile network communication, the adaption of the non-static profile data to this standard enable high platform-independent interoperability, e.g. as defined in technical specification of eUICC profile package interoperable format.

In a preferred embodiment, before the step of sending the profile-disabling command response to the server, the method may further comprise the steps of: Wrapping the profile data by enveloping and securing the profile data. So, the profile data are transferred via an ENVELOPE command from the eUICC to the LPA. To secure this procedure, a policy rule may apply that guarantees that only the MNO has access to this data when stored in the LPA. The profile data may be wrapped with an MNO specific Key and Algorithm.

In the profile itself, a new policy rule may be defined that allows a coding of profile data and that allows a profile uploading and profile transferring to the LPA when the profile is in the disabled state. The policy rule may also include an auto delete of successfully uploaded/transferred profile data without interaction with the LPA or a server.
In a preferred embodiment, non-static profile data of subscription profiles included in the UICC are identified by an applet. This identification may be a marking of the non-static profile data, such as setting a flag, that an element of the profile data when it has been updated, amended, added and/or extended. So, non-static profile data can be identified easily and are collected easily for a respective sending of these non-static profile data.

The applet may be executed for all subscription profiles included in the eUICC. The server may disable the profile without prompt deletion. So, the profile is disabled but not deleted yet. Using the applet improves the collection of the non-static profile data since they are already identified during disabling profile procedure. If the LPA triggers the deletion of the non-static profile data in a later stage, the collection of the non-static profile data is much easier upon obtaining the deletion-command and so, the deletion procedure is not delayed unnecessary.

Alternatively, the applet may be enabled after confirmation of a profile-download procedure completion indicated by the UICC. So, as soon as a new profile slot is created, and the static profile data of the profile is downloaded, the applet is enabled and may identify updates of the profile upon its receival.

Alternatively, the applet may be enabled after enabling of a subscription profile in a profile-enabling procedure indicated by the UICC. So, upon enablement of the profile, also the applet is enabled and may identify updates of the profile upon its receival. This applet may be executed or enabled upon proactive command REFRESH in a profile-enabling procedure.

The identifying may be executed upon receipt of any update-data for updating subscription profiles. So, whenever updates or amended data are received for the downloaded or enabled profile, the marking is processed. E.g. the update or data is flagged, or its receipt is noted in a table included in the eUICC.

In a preferred embodiment, the method has the further steps of: Receiving a profile-enabling command for re-enabling the subscription profile previously disabled in the UICC; Initiating a transferring of at least the non-static profile data from the local profile assistant to the subscription profile of the UICC; and Enabling the subscription profile. So, whenever the profile data was deleted it is now possible to restore (by transfer) the profile having the static profile data and the non-static profile data from the LPA and so, the profile is already updated to the version that has been disabled and deleted once.

The profile-creating command may be initiated by a create-profile function from an MNO and/or a subscription managing server during a profile-creating procedure as defined in GSMA.

In another aspect, a method for managing subscription profiles in a local profile assistant, the method comprises the steps of: Sending a profile-disabling command from the local profile assistant for disabling an enabled subscription profile to an UICC; Receiving at least the non-static profile data from the UICC at the LPA; and Storing the non-static profile data of the disabled subscription profile at the LPA.

So, the non-static profile data of the profile to be disabled is received at the LPA side and so, the actual version of the profile is secured prior/during disabling the profile.

In a preferred embodiment, after the storing step, the method comprises the following steps of: Sending a profile-deleting command to the UICC upon successful storing the non-static profile data of the subscription profile.

In another aspect of the present disclosure, an embedded Universal Integrated Chip Card, operably incorporated in a terminal device comprises: a storage for storing subscription profiles, wherein each subscription profile comprises static profile data and non-static profile data; an interface for communicating to a local profile assistant, an interface for communicating to a subscription managing server, wherein the eUICC being configured to execute the aforementioned method steps.

In another aspect of the present disclosure, a computer-program-product is executably installed in a Universal Integrated Chip Card, UICC, and comprises means for executing the aforementioned method steps for managing subscription profiles.

Preferably, computer-program-product is at least partly a Java Card applet that is executed in the UICC being integrated in a terminal device.

### BRIEF DESCRIPTION OF THE DRAWINGS

In the following exemplary embodiments of the invention are described with reference to drawings. Those exemplary embodiments do not limit the scope of the invention. The same reference signs in different drawings indicate the same elements or at least the same functions unless otherwise stated.
Fig.1 shows an exemplary embodiment of a subscription managing system as defined in GSMA technical specification SGP.22 of version 2.2;
Fig.2 shows an exemplary embodiment of a subscription profile according to the invention;
Fig.3 shows an exemplary embodiment of a process flow of a method for managing a subscription profile in a eUICC according to the invention;
Fig.4 shows an exemplary embodiment of a process flow of a method for managing a subscription profile in a local profile assistant according to the invention; and
Fig.5 shows an exemplary embodiment of a process flow for disabling and deleting a subscription profile according to the invention in a subscription managing system according to Fig.1.

### DETAILED DESCRIPTION OF THE PREFERRED EMBODIMENTS

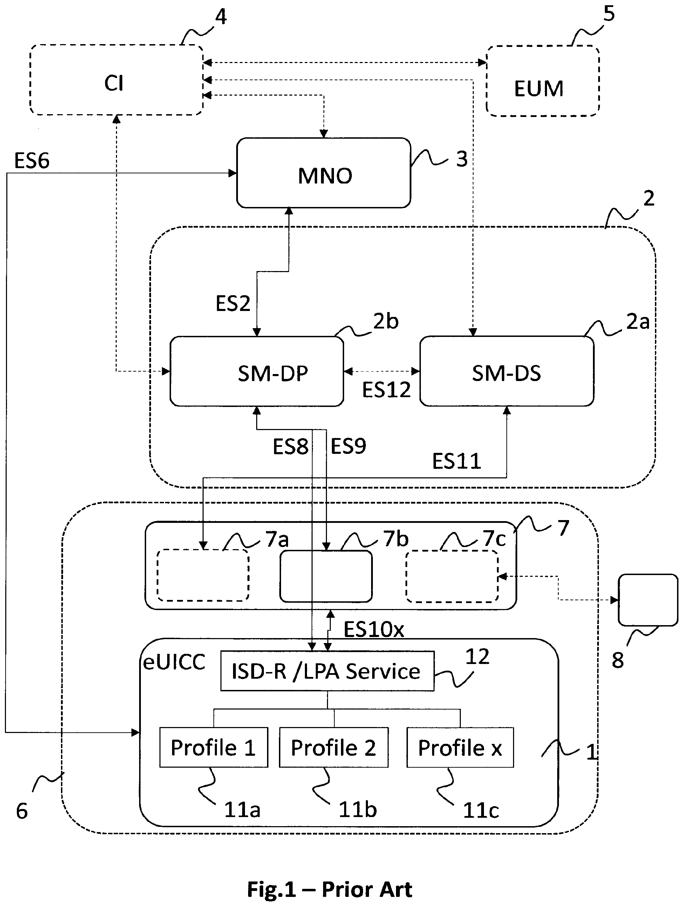

Fig.1 shows an exemplary embodiment of a subscription managing system as defined in GSMA technical specification SGP.22 of version 2.2, section 2. The system components shown in dashed-lines are not required for the inventive solution and are presented merely for completeness reasons. In Fig.1, the roles and interfaces associated with the remote provisioning and management of the eUICC, building on GSMA standard has at least one eUICC 1 located in a terminal device 6. The terminal device 6 comprises a local profile assistant, LPA, 7. The LPA can also be located inside the eUICC 1 (not shown in Fig.1).

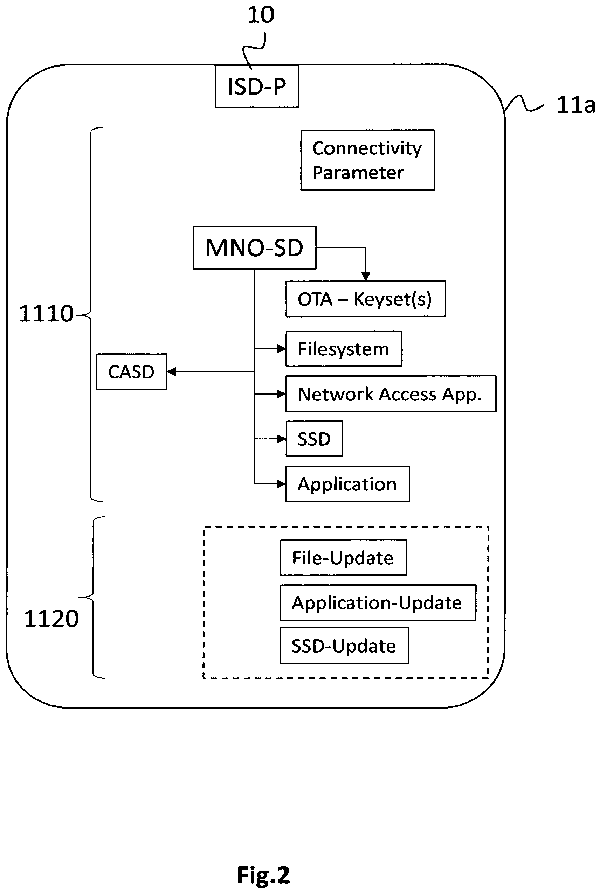

Each eUICC 1 of the system in Fig.1 has a dedicated security domain, SD, with different privileges and configuration for platform and profile management, such as ISD-R 12. The ISD-R is responsible for creation of new profiles 11a, 11b, 11c. An eUICC controlled authority security domain, ECASD, may be included as well (not shown in Fig.1). An ISD-P is the representative of an off-card entity of a subscription management data preparation, server, SM-DP 2b. In Fig.1, three profiles 11a, 11b, 11c are shown that are managed and secured by three ISD-Ps 10 (see Fig.2). The number of profiles 11a, 11b, 11c included the eUICC 1 is not limited and can be more than three or even less.

In Fig.1, a subscription managing discovery service server, SM-DS 2a and the SM-DP 2b are shown as separate entities but can functionally be considered as one server 2, as indicated by dotted-line.

There is only one ISD-R 12 on an eUICC 1. The ISD-R 12 may be installed and first personalized by an eUICC manufacturer 5, EUM, during eUICC 1 manufacturing. After eUICC 1 manufacturing, the ISD-R 12 is in life-cycle state PERSONALIZED. The ISD-R 12 is only able to perform platform management functions on ISD-Ps 10.

An ISD-P hosts a unique profile 11a, 11b, 11c. Only one ISD-P is enabled on an eUICC 1 at any point in time. An ISD-P is installed by the ISD-R 12 and then personalized by the LPA 7, especially the LPD 7b via interface ES10x. At least one ISD-P 10 with a profile 11a, 11b, 11c may be installed and first personalized by the EUM 5 during eUICC 1 manufacturing to allow future eUICC connectivity.

No component outside the ISD-P 10 has visibility or access to any profile component of the profile 11a, 11b, 11c apart from the ISD-R 12, which has read access to policy rules and to the connectivity parameters of each profile 11a, 11b, 11c. No profile component is visible of, or accessible by components outside its ISD-P. An ISD-P 10 shall not have any visibility of, or access to, any other ISD-P 10.

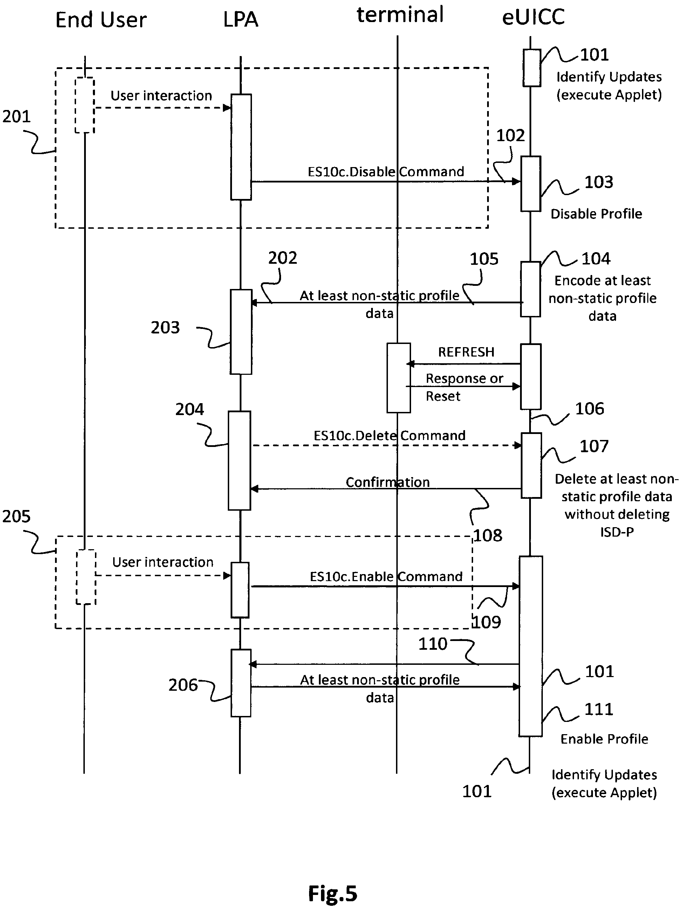

An ISD-P 10 remain associated to the ISD-R 12 during all its life time for the ISD-R 12 to be able to perform following Platform Management functions: Profile Creation - the association between the ISD-R 12 and an ISD-P creatable any time; Profile Deletion; Profile Enabling; Profile Disabling; Fallback Attribute setting; and profile transport function. The structure of the profiles 11a, 11b, 11c will be described in Fig.2. Parts of the profile-procedures are described in Fig.5.

In the terminal device 6 there is provided a local profile assistant 7 that takes responsibility for securely forwarding subscription profile data and commands from the server 2b to the eUICC 1. The LPA 7 comprises a local profile download unit 7b the directly access the ISD-R 12 with LPA-services in the eUICC 1 via an interface ES.10c, being a JC-based secure communication channel.

A plurality of interface ESx are defined in the system of Fig.1 :
The interface ES8 addresses functions to the eUICC 1 through a secure channel established between the SM-DP 2b and the ISD-P 10. The eUICC 1 supports SCP03/SCP03t for ES8. To enable SCP03/SCP03t, the ISD-P 10 is personalized with at least one key set. The ES8 interface is between the SM-DP 2b and its ISD-P 10 and goes through the LPA 7, especially the LPD 7b. The ES8 is realized by a SCP03 or SCP03t secure channel that may be tunneled through a secure channel between the SM-DP 2b and the LPA 7 established in an ES9 interface and on through a secure channel ES10.c between the LPD 7b and the ISD-R 12. It is then provided by the ISD-R 12 to the ISD-P 10.

An interface ES6 addresses functions to the eUICC 1 through a secure channel established between an MNO 3 and an MNO-security domain, MNO-SD, included in each ISD-P 10. The eUICC 1 supports SCP80 and SCP81 as defined in ETSI 102 225 and ETSI 102 226 for this E6 interface. The initial OTA Key sets are part of each profile 11a, 11b, 11c and are loaded by the SM-DP 2b during a profile download and installation procedure or are loaded by the EUM 5 before eUICC 1 is issued.

The LPA 7 and the eUICC 1 communicate via interface ES10x. ES10x contains three different interfaces (not shown in Fig. 1). An ES10a is an interface defined between an LDS 7a and the LPA Services in the ISD-R 12. An ES10b is an interface defined between an LPD 7b and the LPA Services in the ISD-R 12. An ES10c is an interface defined between a LUI 7c and the LPA Services in the ISD-R 12. Before sending any command to the eUICC 1, the LPA 7 establishes a logical channel and select the ISD-R 12. The opening of the logical channel and the selection of the ISD-R 12 may be done explicitly using, respectively, the MANAGE CHANNEL command and the SELECT command. This MANAGE CHANNEL and SELECT commands can be intrinsically used via a dedicated Device OS application programming interfaces API.

The terminal device 6 ensures that only the LPA 7, but no other application on the terminal device 6, is permitted to select the ISD-R 12.

One generic Application Protocol Data Unit, APDU is used on the interfaces ES10x to transport all command request and command response data between the LPA 7 and the eUICC 1. All functions may use the command message STORE DATA as defined in Global Platform Card Specification.

The interfaces ES10x are defined with command functions that can be handled with a single APDU command and response pair. If the size of the response is bigger than 256 bytes, the chaining of the commands is done as defined in ISO/IEC 7816-4. The responses are retrieved by the terminal device 7 using several GET RESPONSE commands.

The eUICC 1 indicates a successful execution of the APDU command by the status bytes '90 00' if no proactive command is pending and by '91 XX' if a proactive command (e.g., REFRESH) is pending. When a profile state change is ongoing, a command was sent to the eUICC 1 which mandates a REFRESH.

In the system of Fig.1, the OTA communication is exclusively handled by the LPA 7 and the server 2b. The server 2b uses SMS, CAT TP and HTTPS for remote OTA communication with the eUICC 1. In HTTPS case, the server 2b and eUICC 1 support DNS resolution to resolve the IP address of the SM-DP 2b. For LTE network deployments the system of Fig. 1 supports SMS. The SM-DP 2b is free to select the most relevant protocol according to the eUICC 1 and the capabilities of the terminal device 6 and the platform or Profile Management operation to execute.

The eUICC 1 supports sending of secure packet over SMS as defined in 3GPP TS 31.115. SMS, either mobile terminated, MT, or mobile originated, MO, may use a CC with a length of 64 bits using AES CMAC mode, ciphering using AES in CBC mode and counter value higher.

Fig.2 shows an exemplary embodiment of a subscription profile according to the invention. A profile 11a is controlled by ISD-P 10 as explained above. The profile 11a has static profile data 1110 and non-static profile data 1120. The static profile data 1110 is the profile data available during a downloading and creating-procedure. This static profile data 1110 is specified by and under the full control of the MNO 3. The static profile data 1110 may contain at least one of the following: an MNO security domain, MNO-SD having the MNO's OTA Key sets; at least one network access application, NAA, policy rules, POL, a file system; connectivity parameters of the profile, applications (e.g. as defined in Global Platform Card Specification in addition to the MNO-SD); and/or one Controlling Authority SD, CASD, e.g. as defined in Global Platform Card Specification UICC Configuration.

During an enabled-state of the profile 11a the static profile data 1110 can be updated or amended and extended (e.g. by additional applications). Each updated element of the static profile data 1110 of the profile 11a is hereinafter referred to as non-static profile data 1120.

The non-static profile data 1120 of the subscription profile 11a comprise at least one of the following: at least one subscription profile application update; at least one subscription profile file update; at least one network access application update; at least one over-the-air update; and/or at least one secure domain data update as shown in Fig.2.

Since each element in the non-static profile data 1120 is updated separately and during different time points during the enabling-state of the profile 11a, all the elements of the non-static profile data 1120 are now advantageously collected and provided to the LPA 7 during a profile-disabling-procedure.

In the profile 11a, 11b, 11c, a policy rule is defined that allows a coding of profile data 1110, 1120 and that allows profile data being transferred to the LPA 7 when the profile 11a, 11b, 11c is in the disabled state. The policy rule may also include an auto delete rule of successfully uploaded/transferred profile data 1110, 1120 without interaction with the LPA 7 or a server 2, 3.

So, it will be possible to restore this non-static profile data 1120 at once after a deletion and a piece-by-piece updating of the profile 11a after re-enabling the profile 11a is avoided.

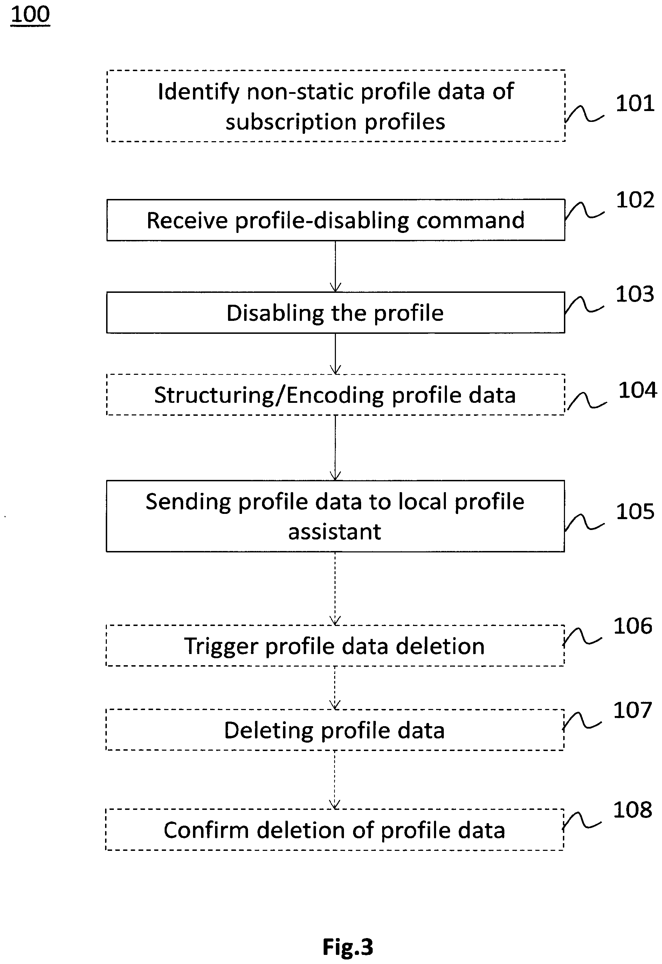

Fig.3 shows an exemplary embodiment of a process flow of a method 100 for managing a subscription profile in a eUICC 1 according to the invention. Process steps that are optional are drawn in dashed lines.

In optional step 101, the non-static profile data 1120 of a profile 11a, 11b, 11c is identified. This is done by a JC applet executed in the eUICC 1 for observing any amendment in the profile 11a, 11b, 11c. The identification 101 can be achieved by setting a flag or by noting the amendments in a table.

In a receiving step 102, a profile-disabling command is received from the LPA 7 for disabling an enabled subscription profile 11a, 11b, 11c in the UICC 1. The receiving step is made via interface ES10x. The subscription profile 11a, 11b, 11c comprises a static profile data 1110 and a non-static profile data 1120 as described in Fig.2. In a subsequent disabling step 103, the subscription profile 11a, 11b, 11c is disabled by the UICC 1. In a sending step 105, the non-static profile data 1120 of the disabled subscription profile 11a, 11b, 11c is send to the LPA 7.

The non-static profile data 1120 is structured according to an ANS.1 language script and is encoded according to DER-format, see step 104. So, different kinds of data (files, applications, keys, etc.) can be structured in a data field of an SMS and send to the server 2 for storing. Alternatively, the ENEVELOPE command is used to provide the non-static profile data 1120 to the LPA 7. The profile data may be wrapped with an MNO specific Key and Algorithm.

After the sending step 105, the profile data of that disabled profile can be deleted. In step 106, this deletion is triggered, e.g. by the eUICC 1 itself when a REFRESH command has been successfully operated or by the LPA 7 which provides a respective profile-deleting command to the eUICC 1. Subsequently, at least the non-static profile data 1120 is deleted in step 107. Preferably, all profile data with deletion of the static profile data 1110 and the non-static profile data 1120 of the disabled subscription profile 11a, 11b, 11c is performed in step 107. However, only the profile data 1110, 1120 are deleted without deletion of the ISD-P, so that an empty profile 11a, 11b, 11c remains in the eUICC 1. A confirmation is sent from the eUICC 1 in step 108 indicating that the profile 11a, 11b, 11c is deleted.

So, although deleted in the eUICC 1, the non-static profile data 1120 is sent to the LPA 7, e.g. to indicate the actual version of the profile 11a, 11b, 11c and to allow a restoring (re-establishing) of the entire profile with static and non-static profile data 1110, 1120 in the eUICC 1. So, a disabled profile does not necessarily be kept in the eUICC 1 which saves memory space in the eUICC 1 that can be used for other purposes.

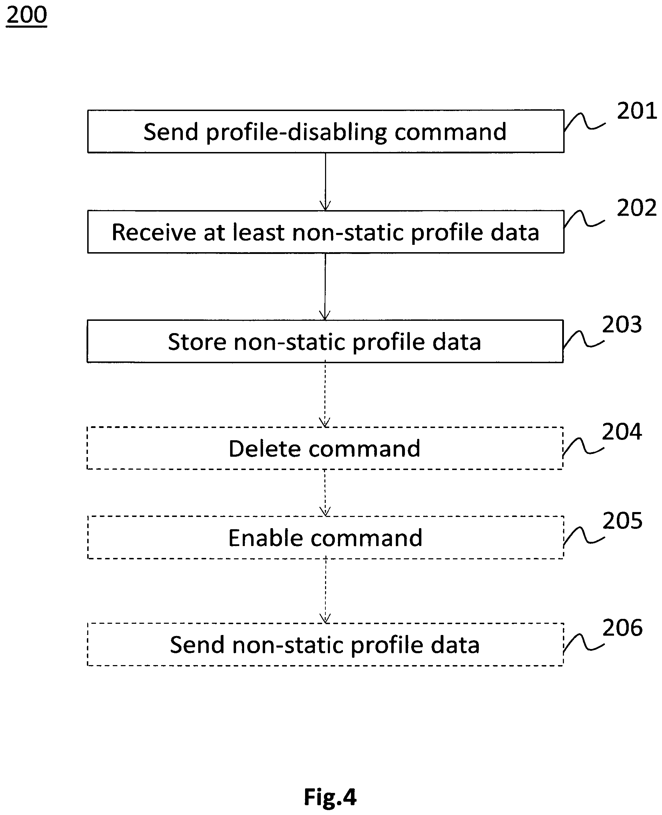

Fig.4 shows an exemplary embodiment of a process flow of a method 200 for managing a subscription profile in a local profile assistant LPA 7 according to the invention. Process steps that are optional are drawn in dashed lines.

In step 201, a profile-disabling command from the LPA 7 for disabling an enabled subscription profile 11a, 11b, 11c to an UICC 1 is sent, wherein the subscription profile 11a, 11b, 11c comprises a static profile data 1110 and a non-static profile data 1120. In step 202, at least a non-static profile data 1120 of the profile to be disabled is received at the LPA 7 from the UICC 1. Preferably, the whole profile data included the non-static profile data 1110 of the disabled subscription profile 11a, 11b, 11c is received in step 202.

Subsequently, in step 203, the non-static profile data 1120 of the disabled subscription profile 11a, 11b, 11c is stored in the LPA 7. Therefore, the LPA 7 comprises a storage for storing a plurality of non-static profile data 1120.

Alternatively, or additionally (not shown in Fig.4), the non-static profile data 1120 of the disabled subscription profile 11a, 11b, 11c is transferred to a mobile network operating server 3. So, the non-static profile data t 1120 of subscription profiles is stored in the MNO server 3.

Optionally, in step 204, a profile-enabling command is sent to the UICC 1 upon successful storing the non-static profile data 1120 of the subscription profile 11a, 11b, 11c.

Optionally, in step 205, a profile-enabling command is sent from the LPA 7 to the UICC 1. In step 206, at least the non-static profile data 1120 are sent from the LPA 7 to the eUICC 1.

Fig.5 shows an exemplary embodiment of a process flow for disabling, deleting and enabling a subscription profile according to the invention in a subscription managing system according to Fig.1.

It is assumed that the eUICC 1 identified updates of the profile to be disabled using an applet as described with step 101. This may be achieved by running a specific JC applet in the eUICC 1. So, the eUICC 1 is aware of the non-static profile data 1120 of the profile to be disabled.

Step 201. An end user 8 may be presented with a user interface that displays the list of installed Profiles within the eUICC 1, with their current states (Enabled or Disabled). The End User 8 may select the Profile to be Disabled and this selection is presented to the LUI 7c of the LPA 7. The disabling of a Provisioning Profile or a Test Profile can also be initiated by the LPA 7 itself without any end user 8 interaction. The LPA 7 may check the profile policy rules of the Profile and give appropriate warnings to the end user 8.

The LPA 7 calls the disable profile function with a refresh flag not being set. The terminal device 6 has the responsibility to ensure that the relevant conditions for use are met, especially that the application session termination procedure in accordance with ETSI TS 102 221 is running for every active application of the currently enabled Profile; all logical channels that were used to select these applications are closed and an ongoing proactive command session is terminated.

The LPA 7 calls the "ES10c.DisableProfile" function of the ISD-R with its relevant input data, which includes the indication if a REFRESH proactive command is needed. This function is used to disable a profile 11a, 11b, 11c on the eUICC 1.

Upon reception of the Disable Profile function, the eUICC 1 checks if there is a proactive session ongoing (which the terminal device 6 did not terminate). If so, the eUICC 1 terminates the Disable Profile function with error "catBusy". Further, all logical channels which still have an application of the currently enabled profile selected (which the Device did not close) are closed, without generating an error. Regardless of the value of refresh Flag, the eUICC verifies that the target Profile is in the Enabled state. If any of these verifications fail, terminate the command with an error. If the refresh Flag is not set, the eUICC 1 resets the PIN status. In step 103, the eUICC disables the currently Enabled Profile.

In step 104, the eUICC 1 encodes at least the non-static profile data 1120 of the profile data of the disabled profile using an ENVELOPE command. In step 105, these encoded data 1120 are transferred to the LPA 7 and are received in the LPA 7 in step 202. These data 1120 are stored in the LPA 7 in step 203, e.g. in a database or storage of the LPA 7. Alternatively, or additionally (not shown in Fig.5), the non-static profile data 1120 of the profile data is transferred to an MNO 3, e.g. via interface ES8 and ES.2. The profile data may be wrapped with an MNO specific Key and Algorithm.

Alternatively, in step 104, the eUICC 1 non-static profile data 1120 of the target profile to be disabled is encoded in DER-format and structured as ASN.1 message. This ASN.1 message is send to the LPA 7 in step 105. These data 1120 are stored in the LPA 7 in step 203, e.g. in a database or storage of the LPA 7. Alternatively, or additionally (not shown in Fig.5), the non-static profile data 1120 of the profile data is transferred to an MNO 3, e.g. via interface ES8 and ES.2.

After step 105, the ISD-R 12 may also return a response to the disable command 102 to indicate that the profile is disabled. This response may be output to the end user 8 via the LUI 7c.

Subsequently to step 105, a proactive command REFRESH (initiated by the ISD-R 10) is send to the terminal device 6 from the eUICC 1 during "UICC Reset" mode according to ETSI TS 102 223. The REFRESH proactive command may be send from the eUICC 1 to the terminal device 6 to reset the eUICC 1 by the terminal device 6.

In step 204, the LPA 7 sends a "ES10c.DELETE" command with its relevant input data to the eUICC 1, e.g. the ISD-R 12 for deleting the profile data of the previously disabled profile 11a, 11b, 11c. This command is received in the eUICC 1. Upon receipt, the eUICC 1 deletes the non-static profile data 1120 (e.g. and the static profile data 1110) from the profile without deleting the ISD-P 10 of that profile in step 107. The eUICC 1 provides a deletion-confirmation in step 108.

During step 107, the ISD-R 12 of the eUICC 1 may enforce the policy rule of the target profile to identify whether the profile can be deleted. Upon reception of the DELETE command, the eUICC 1, e.g. the ISD-R 12 may verify that the policy rule of the target profile allows its deletion. This includes, that the target profile is not the profile with fallback Attribute set and that the target profile is not in the Enabled state.

Subsequently, a procedure for re-establishing a previously deleted subscription profile in a subscription managing system according to Fig.1 is shown in the lower section of Fig.5 starting with step 205. In Fig.6 it should be noted that a previously deleted profile should be re-established in the eUICC 1 with the non-static profile data 1120 of that previously deleted profile.

In step 109, the eUICC 1 receives a command "ES10cEnable" with the identification of the ISD-P 10, being an empty profile.

The eUICC 1, e.g. the ISD-R 12, identifies the empty profile 11a, 11b, 11c having ISD-P 10 and requests in step 110, at least the non-static profile data 1120 from the LPA 7.

In step 206, the LPA 7 restores the non-static profile data 1120 of the profile from its database or storage or requests the non-static profile data 1120 from the MNO 3. Subsequently, the non-static profile data 1120 of the profile are send to the eUICC 1. A confirmation may be send from the eUICC 1 to the LPA 7. Upon confirmation, the profile is completely downloaded and the step 101 may be operated. There, a JC applet in the eUICC 1 may be enabled to identify any further updates of the created and downloaded profile. It has to be noted that the step 101 can be used to trigger the JC applet even if the profile that is created is new and has not been previously disabled and deleted.

Since the download is completed and has been confirmed in step 101, any update data or data added to the profile is now identified in step 101. The respective update data may be flagged, or a table may be used.

In step 111, the profile is enabled by the eUICC 1, if the policy rules of ISD-R 12 allow, the ISD-R 12 disables the currently enabled ISD-P 10 and enable the targeted ISD-P 10. The ISD-R 12 may return the successful enabling of the profile. Not shown in Fig.5 is that the eUICC 1, e.g. ISD-R 12 sends a REFRESH proactive command in "UICC reset mode" to the terminal device 6. This will trigger the execution of a network attach procedure. If successful, this can also be used to trigger the identification of updates provided to this enabled profile as step 101.

The system of Fig.1 has the server 2 (SM-DS 2a and SM-DP 2b) and a terminal 6 having an LPA 7 and a UICC 1 being incorporated in a terminal device 6. A JC-based applet may be used to identify updates in a profile. The applet is triggered (enabled) according to steps 101 in Fig.5 - which is independent on whether a completely new profile is created, or a previously deleted profile is re-established.

The applet can identify incoming updates to all profiles and may so mark non-static profile data 1120 in different profiles included in the eUICC.

The eUICC 1 comprises a basic OS that has basic functionality to the apple and can establish and participate in a communication via communication link ES8 to the server 2. The communication link ES8 is a logical communication link, meaning that a physical path of this communication links is directed via the device terminal 6. The server 2 or the MNO 3 have at least a storage for storing a plurality of non-static profile data 1120.

All features of all embodiments described, shown and/or claimed herein can be combined with each.

While various embodiments of the present invention have been described above, they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a feature of the invention may have been disclosed with respect to only one of several implementations, such feature may be combined with one or more other features of the other implementations as may be desired and advantageous for any given or application.

### LIST OF REFERENCE SIGNS

- 1: eUICC
10 Profile Issuer Security Domain, ISD-P
11a-c Subscription Profiles,
1110 Static profile data
1120 Non-Static profile data
12 Root Issuer Security Domain, ISD-R and LPA Service
- 2: Subscription Managing Server
2a Subscription Manager Discovery Server, SM-DS
2b Subscription Manager Data Preparation, SM-DP+
- 3: Mobile Network Operator
- 4: Certificate Issuer, CI
- 5: eUICC Manufacturer, EUM
- 6: Terminal Device
- 7: Local profile assistant, LPA
7a Local Discovery Service, LDS
7b Local Profile Download, LPD
7c Local User Interface, LUI
- 8: End User
- 101-111: Method steps in UICC
- 201-205: Method steps in LPA
- ESx: Interfaces

## Claims

1. A method (100) for managing subscription profiles in a Universal Integrated Chip Card, UICC (1) included in a terminal device (6) having a local profile assistant (7), the method (100) being performed by the UICC (1) and comprising the steps of:
- Receiving (102) a profile-disabling command from the local profile assistant (7) for disabling an enabled subscription profile (11a, 11b, 11c) in the UICC (1), wherein the subscription profile (11a, 11b, 11c) comprises static profile data (1110) and non-static profile data (1120) and wherein each change in the static profile data (1110) after an enabling of the subscription profile (11a, 11b, 11c) is non-static profile data;
- Disabling (103) the subscription profile (11a, 11b, 11c) by the UICC (1) after the receiving step (102);
- Sending (105) at least the non-static profile data (1120) to the local profile assistant (7) after the disabling step (103).

2. The method (100) of claim 1, wherein after the step of sending (105) the profile data to the local profile assistant (7), the method (100) further comprises:
- Triggering (106) the deletion of the non-static profile data (1120) of the disabled subscription profile in the UICC (1);
- Deleting (107) at least the non-static profile data (1110) from the disabled subscription profile (11a, 11b, 11c) without deletion of profile issuer security domain, ISD-P.

3. The method (100) of claim 1 or 2, wherein the sending step (105) also includes sending (105) the static-profile data (1110) to the local profile assistant (7).

4. The method (100) of claim 3, wherein the deleting step (107) also includes deleting (107) the static-profile data (1110) from the disabled subscription profile (11a, 11b, 11c) without deletion of the profile issuer security domain, ISD-P.

5. The method (100) of claims 3 or 4, wherein the static profile data (1110) are at least one of the following:
- at least one mobile network operator's security domain, MNO-SD;
- at least one over-the-air key set;
- at least one subscription profile application;
- at least one connectivity parameter;
- at least one subscription profile file;
- at least one network access application; and/or
- at least one secure domain data.

6. The method (100) of one of the preceding claims, wherein the non-static profile data (1120) are at least one of the following:
- at least one subscription profile application update;
- at least one subscription profile file update;
- at least one network access application update;
- at least one over-the-air-update; and/or
- at least one secure domain data update.

7. The method (100) of one of the preceding claims, wherein before the step of sending (105) to the local profile assistant (7), the method (100) further comprising the step of:
- Structuring (104) the profile data (1110, 1120) in an Abstract Syntax Notation One, ANS.1, language by encoding it in a Distinguished Encoding Rules, DER, format.

8. The method (100) of one of the preceding claims, wherein before the step of sending (105) to the local profile assistant (7), the method (100) further comprising the step of:
- Wrapping (104') the profile data (1110, 1120) by enveloping and securing the profile data (1110, 1120).

9. The method (100) of one of the proceeding claims, wherein non-static profile data (1120) of the subscription profiles (11a, 11b, 11c) included in the UICC (1) are identified by an applet.

10. The method (100) of claim 9, wherein the applet is enabled after confirmation (101a) of a profile-download procedure completion indicated by the UICC (1) or after enabling (101b) of a subscription profile (11a, 11b, 11c) in a profile-enabling procedure indicated by the UICC (1).

11. The method (100) of one of the claims 9 or 10, wherein the identifying (101) is executed upon receipt of update-data for updating subscription profiles (11a, 11b, 11c).

12. The method (100) of one of the claims 2 to 11 having the further steps of
- Receiving (109) a profile-enabling command for re-enabling the subscription profile (11a, 11b, 11c) previously disabled in the UICC (1);
- Initiating (110) a transferring of at least the non-static profile data (1110, 1120) from the local profile assistant (7) to the subscription profile (11a, 11b, 11c) of the UICC (1); and
- Enabling (111) the subscription profile (11a, 11b, 11c).

13. A method (200) for managing subscription profiles in a local profile assistant, LPA (7) of a terminal device, the method (200) being performed by the LPA (7) and comprising the steps of:
- Sending (201) a profile-disabling command from the LPA (7) for disabling an enabled subscription profile (11a, 11b, 11c) to an UICC (1), wherein the subscription profile (11a, 11b, 11c) has static profile data (1110) and non-static profile data (1120) and wherein each change in the static profile data (1110) after an enabling of the subscription profile (11a, 11b, 11c) is non-static profile data (1120);
- Receiving (202) at least the non-static profile data (1120) from the UICC (1) at the LPA (7) after the sending step (201); and
- Storing (203) the received non-static profile data (1120) of the disabled subscription profile (11a, 11b, 11c) at the LPA (7).

14. An embedded Universal Integrated Chip Card (1), eUICC, operably incorporated in a terminal device (6) comprising:
- a storage for storing subscription profiles (11a, 11b, 11c), wherein each subscription profile (11a, 11b, 11c) comprises static profile data (1110) and non-static profile data (1120);
- an interface (ES10x) for communicating to a local profile assistant (7),
- an interface (ES8) for communicating to a subscription managing server (2b),
- wherein the eUICC (1) being configured to execute the method steps (101 to 111) of one of the claims 1 to 12.

15. A computer-program-product executably installed in a Universal Integrated Chip Card (1), UICC, and wherein the execution of the computer-program-product causes the UICC to perform all the method steps (101 to 111) of one of the preceding claims 1 to 12.

## Patentansprüche

1. Verfahren (100) zum Verwalten von Subskriptionsprofilen in einer Universal Integrated Chip Card, UICC (1), die in einem Endgerät (6) mit einem lokalen Profilassistenten (7) enthalten ist, wobei das Verfahren (100) von der UICC (1) durchgeführt wird und die folgenden Schritte umfasst:
- Empfangen (102) eines Profildeaktivierungsbefehls vom lokalen Profilassistenten (7) zum Deaktivieren eines aktivierten Subskriptionsprofils (11a, 11b, 11c) in der UICC (1), wobei das Subskriptionsprofil (11a, 11b, 11c) statische Profildaten (1110) und nicht-statische Profildaten (1120) umfasst und wobei jede Änderung der statischen Profildaten (1110) nach einer Aktivierung des Subskriptionsprofils (11a, 11b, 11c) nicht-statische Profildaten sind;
- Deaktivieren (103) des Subskriptionsprofils (11a, 11b, 11c) durch die UICC (1) nach dem Empfangsschritt (102);
- Senden (105) zumindest der nicht-statischen Profildaten (1120) an den lokalen Profilassistenten (7) nach dem Deaktivieren-Schritt (103).

2. Das Verfahren (100) nach Anspruch 1, wobei nach dem Schritt des Sendens (105) der Profildaten an den lokalen Profilassistenten (7), das Verfahren (100) weiter umfasst:
- Auslösen (106) des Löschens der nicht statischen Profildaten (1120) des deaktivierten Subskriptionsprofils in der UICC (1);
- Löschen (107) zumindest der nicht statischen Profildaten (1110) aus dem deaktivierten Subskriptionsprofil (11a, 11b, 11c) ohne Löschen der Profilsicherheitsdomäne, ISD-P.

3. Das Verfahren (100) nach Anspruch 1 oder 2, wobei der Senden-Schritt (105) auch das Senden (105) der statischen Profildaten (1110) an den lokalen Profilassistenten (7) umfasst.

4. Das Verfahren (100) nach Anspruch 3, wobei der Löschen-Schritt (107) auch das Löschen (107) der statischen Profildaten (1110) aus dem deaktivierten Subskriptionsprofil (11a, 11b, 11c) ohne Löschen der Profilsicherheitsdomäne, ISD-P, umfasst.

5. Das Verfahren (100) nach Anspruch 3 oder 4, wobei die statischen Profildaten (1110) zumindest eine der folgenden sind:
- zumindest eine Sicherheitsdomäne eines Mobilfunknetzbetreibers, MNO-SD;
- zumindest einen Over-the-Air Schlüsselsatz;
- zumindest eine Subskriptionsprofil-Anwendung;
- zumindest einen Verbindungsparameter;
- zumindest eine Subskriptionsprofil-Datei;
- zumindest eine Netzwerkzugangs-Anwendung; und/oder
- zumindest einen Sicherheitsdomäne-Datensatz.

6. Das Verfahren (100) nach einem der vorhergehenden Ansprüche, wobei die nicht-statischen Profildaten (1120) zumindest eine der folgenden sind:
- zumindest eine Aktualisierung der Subskriptionsprofil-Anwendung;
- zumindest eine Aktualisierung der Subskriptionsprofil -Datei;
- zumindest eine Aktualisierung der Netzwerkzugangs-Anwendung;
- zumindest eine Over-the-Air-Aktualisierung; und/oder
- zumindest eine Sicherheitsdomain-Datensatz-Aktualisierung.

7. Das Verfahren (100) nach einem der vorhergehenden Ansprüche, wobei das Verfahren (100) vor dem Schritt des Sendens (105) an den lokalen Profilassistenten (7) weiterhin den Schritt umfasst:
- Strukturieren (104) der Profildaten (1110, 1120) in einer Abstract Syntax Notation One, ANS.1, Sprache durch Kodieren in ein Distinguished Encoding Rules, DER, Format.

8. Das Verfahren (100) nach einem der vorhergehenden Ansprüche, wobei das Verfahren (100) vor dem Schritt des Sendens (105) an den lokalen Profilassistenten (7) weiterhin den Schritt umfasst:
- Verpacken (104') der Profildaten (1110, 1120) durch Umhüllen und Sichern der Profildaten (1110, 1120).

9. Das Verfahren (100) nach einem der vorhergehenden Ansprüche, wobei nicht-statische Profildaten (1120) der in der UICC (1) enthaltenen Subskriptionsprofile (11a, 11b, 11c) durch ein Applet identifiziert werden.

10. Das Verfahren (100) nach Anspruch 9, wobei das Applet nach der Bestätigung (101a) eines von der UICC (1) angezeigten Abschlusses einer Profil-Herunterlade-Prozedur oder nach der von der UICC (1) angezeigten Aktivierung (101b) eines Subskriptionsprofils (11a, 11b, 11c) in einer Profil-Aktivierungs-Prozedur aktiviert wird.

11. Das Verfahren (100) nach einem der Ansprüche 9 oder 10, wobei das Identifizieren (101) bei Empfang von Aktualisierungsdaten zur Aktualisierung von Subskriptionsprofilen (11a, 11b, 11c) ausgeführt wird.

12. Das Verfahren (100) nach einem der Ansprüche 2 bis 11 mit den weiteren Schritten:
- Empfangen (109) eines Profilaktivierungsbefehls zur Wiederaktivierung des zuvor in der UICC (1) deaktivierten Subskriptionsprofils (11a, 11b, 11c);
- Initiieren (110) einer Übertragung zumindest der nicht statischen Profildaten (1110, 1120) von dem lokalen Profilassistenten (7) zu dem Subskriptionsprofil (11a, 11b, 11c) der UICC (1); und
- Freigeben (111) des Subskriptionsprofils (11a, 11b, 11c).

13. Ein Verfahren (200) zum Verwalten von Subskriptionsprofilen in einem lokalen Profilassistenten, LPA (7) eines Endgeräts, wobei das Verfahren (200) durch den LPA (7) durchgeführt wird und die folgenden Schritte umfasst:
- Senden (201) eines Profildeaktivierungsbefehls von dem LPA (7) zum Deaktivieren eines aktivierten Subskriptionsprofils (11a, 11b, 11c) an eine UICC (1), wobei das Subskriptionsprofil (11a, 11b, 11c) statische Profildaten (1110) und nicht-statische Profildaten (1120) aufweist und wobei jede Änderung der statischen Profildaten (1110) nach einer Aktivierung des Subskriptionsprofils (11a, 11b, 11c) nicht-statische Profildaten (1120) sind;
- Empfangen (202) zumindest der nicht-statischen Profildaten (1120) von der UICC (1) an dem LPA (7) nach dem Senden-Schritt (201); und
- Speichern (203) der empfangenen nicht-statischen Profildaten (1120) des deaktivierten Subskriptionsprofils (11a, 11b, 11c) im LPA (7).

14. Eine eingebettete Universal Integrated Chip Card, eUICC, die funktionsfähig in ein Endgerät (6) eingebracht ist, umfassend:
- einen Speicher zum Speichern von Subskriptionsprofilen (11a, 11b, 11c), wobei jedes Subskriptionsprofil (11a, 11b, 11c) statische Profildaten (1110) und nicht-statische Profildaten (1120) umfasst;
- eine Schnittstelle (ES 10x) zur Kommunikation mit einem lokalen Profilassistenten (7),
- eine Schnittstelle (ES8) zur Kommunikation mit einem Subskriptionsverwaltungsserver (2b),
- wobei die eUICC (1) zur Ausführung der Verfahrensschritte (101 bis 111) eines der Ansprüche 1 bis 12 eingerichtet ist.

15. Computerprogrammprodukt, das ausführbar in einer Universal Integrated Chip Card, UICC, installiert ist, und wobei die Ausführung des Computerprogrammprodukts die UICC veranlasst, alle Verfahrensschritte (101 bis 111) eines der vorhergehenden Ansprüche 1 bis 12 durchzuführen.

## Revendications

1. Procédé (100) pour gérer des profils d'abonnement dans une carte à puce intégrée universelle, UICC (1) incluse dans un dispositif terminal (6) ayant un assistant de profil local (7), le procédé (100) étant mis en œuvre par l'UICC (1) et comportant les étapes consistant à :
- recevoir (102) une instruction de désactivation de profil provenant de l'assistant de profil local (7) pour désactiver un profil d'abonnement activé (11a, 11b, 11c) dans l'UICC (1), dans lequel le profil d'abonnement (11a, 11b, 11c) comporte des données de profil statiques (1110) et des données de profil non statiques (1120) et dans lequel chaque changement des données de profil statiques (1110) après une activation du profil d'abonnement (11a, 11b, 11c) est une donnée de profil non statique ;
- désactiver (103) le profil d'abonnement (11a, 11b, 11c) par l'UICC (1) après l'étape de réception (102) ;
- envoyer (105) au moins les données de profil non statiques (1120) à l'assistant de profil local (7) après l'étape de désactivation (103).

2. Procédé (100) selon la revendication 1, dans lequel après l'étape d'envoi (105) des données de profil à l'assistant de profil local (7), le procédé (100) comporte en outre les étapes consistant à :
- déclencher (106) la suppression des données de profil non statiques (1120) du profil d'abonnement désactivé dans l'UICC (1) ;
- supprimer (107) au moins les données de profil non statiques (1110) du profil d'abonnement désactivé (11a, 11b, 11c) sans suppression d'un domaine de sécurité d'émetteur de profil, ISD-P.

3. Procédé (100) selon la revendication 1 ou 2, dans lequel l'étape d'envoi (105) inclut également l'envoi (105) des données de profil statiques (1110) à l'assistant de profil local (7).

4. Procédé (100) selon la revendication 3, dans lequel l'étape de suppression (107) inclut également la suppression (107) des données de profil statiques (1110) du profil d'abonnement désactivé (11a, 11b, 11c) sans suppression du domaine de sécurité d'émetteur de profil, ISD-P.

5. Procédé (100) selon les revendications 3 ou 4, dans lequel les données de profil statiques (1110) sont au moins l'un des éléments suivants :
- au moins un domaine de sécurité de l'opérateur de réseau mobile, MNO-SD ;
- au moins un ensemble de clés par voie hertzienne ;
- au moins une application de profil d'abonnement ;
- au moins un paramètre de connectivité ;
- au moins un fichier de profil d'abonnement ;
- au moins une application d'accès à un réseau ; et/ou
- au moins une donnée de domaine sécurisé.

6. Procédé (100) selon l'une des revendications précédentes, dans lequel les données de profil non statiques (1120) sont au moins l'un des éléments suivants :
- au moins une mise à jour d'application de profil d'abonnement ;
- au moins une mise à jour de fichier de profil d'abonnement ;
- au moins une mise à jour d'application d'accès à un réseau ;
- au moins une mise à jour par voie hertzienne ; et/ou
- au moins une mise à jour de données de domaine sécurisé.

7. Procédé (100) selon l'une des revendications précédentes, dans lequel avant l'étape d'envoi (105) à l'assistant de profil local (7), le procédé (100) comporte en outre l'étape consistant à :
- structurer (104) les données de profil (1110, 1120) dans un langage ANS.1 (Abstract Syntax Notation One), en les codant dans un format de règles de codage distinctif, DER.

8. Procédé (100) selon l'une des revendications précédentes, dans lequel avant l'étape d'envoi (105) à l'assistant de profil local (7), le procédé (100) comporte en outre l'étape consistant à :
- boucler (104') les données de profil (1110, 1120) en enveloppant et en sécurisant les données de profil (1110, 1120).

9. Procédé (100) selon l'une des revendications précédentes, dans lequel les données de profil non statiques (1120) des profils d'abonnement (11a, 11b, 11c) inclus dans l'UICC (1) sont identifiées par une applet.

10. Procédé (100) selon la revendication 9, dans lequel l'applet est activée après confirmation (101a) d'un achèvement de procédure de téléchargement de profil indiqué par l'UICC (1) ou après activation (101b) d'un profil d'abonnement (11a, 11b, 11c) dans une procédure d'activation de profil indiquée par l'UICC (1).

11. Procédé (100) selon l'une des revendications 9 ou 10, dans lequel l'identification (101) est exécutée à réception de données de mise à jour pour mettre à jour des profils d'abonnement (11a, 11b, 11c).

12. Procédé (100) selon l'une des revendications 2 à 11 ayant les étapes supplémentaires consistant à :
- recevoir (109) une instruction d'activation de profil pour réactiver le profil d'abonnement (11a, 11b, 11c) précédemment désactivé dans l'UICC (1) ;
- initier (110) un transfert d'au moins les données de profil non statiques (1110, 1120) à partir de l'assistant de profil local (7) vers le profil d'abonnement (11a, 11b, 11c) de l'UICC (1) ; et
- activer (111) le profil d'abonnement (11a, 11b, 11c).

13. Procédé (200) pour gérer des profils d'abonnement dans un assistant de profil local, LPA (7) d'un dispositif terminal, le procédé (200) étant mis en œuvre par le LPA (7) et comportant les étapes consistant à :
- envoyer (201) une instruction de désactivation de profil à partir du LPA (7) pour désactiver un profil d'abonnement activé (11a, 11b, 11c) à une UICC (1), dans lequel le profil d'abonnement (11a, 11b, 11c) a des données de profil statiques (1110) et des données de profil non statiques (1120) et dans lequel chaque changement des données de profil statiques (1110) après une activation du profil d'abonnement (11a, 11b, 11c) est une donnée de profil non statique (1120) ;
- recevoir (202) au moins les données de profil non statiques (1120) provenant de l'UICC (1) au niveau du LPA (7) après l'étape d'envoi (201) ; et
- stocker (203) les données de profil non statiques (1120) reçues du profil d'abonnement désactivé (11a, 11b, 11c) au niveau du LPA (7).

14. Carte à puce intégrée universelle incorporée (1), eUICC, incorporée de manière opérationnelle dans un dispositif terminal (6), comportant :
- un dispositif de stockage pour stocker des profils d'abonnement (11a, 11b, 11c), dans lequel chaque profil d'abonnement (11a, 11b, 11c) comporte des données de profil statiques (1110) et des données de profil non statiques (1120) ;
- une interface (ES10x) pour communiquer avec un assistant de profil local (7),
- une interface (ES8) pour communiquer avec un serveur de gestion d'abonnements (2b),
- dans lequel l'eUICC (1) est configurée pour exécuter les étapes de procédé (101 à 111) de l'une des revendications 1 à 12.

15. Produit de programme informatique installé de manière exécutable dans une carte à puce intégrée universelle, UICC, et dans lequel l'exécution du produit de programme informatique amène l'UICC à exécuter toutes les étapes de procédé (101 à 111) de l'une des revendications 1 à 12 précédentes.
